# EUROPEAN PATENT APPLICATION

(11) **EP 2 416 565 A1**
(43) Date of publication of application: **08.02.2012**
(21) Application number: 10305864.0
(22) Date of filing: 05.08.2010
(51) Int. Cl.: H04N 5/46, H04N 5/00, H04N 5/44

(54) **METHOD FOR HANDLING OF AUDIO/VIDEO SIGNALS AND CORRESPONDING DEVICE**

(71) Applicant: Thomson Licensing, 92130 Issy-les-Moulineaux (FR)
(72) Inventor: GUITTON, Xavier, 92443, Issy-Les-Moulineaux (FR)
(74) Representative: Le Dantec, Claude

(57) **Abstract**

The present invention generally relates to a method and device for handling of audio/video signals originating from a mix of analog and digital sources of audio/video signals. In particular, the present invention relates to optimization of hardware resources and of wiring needed for the interconnection of various analog and digital sources of audio/video signals.

## Description

### 1. Field of invention.

The present invention generally relates to a method and device for handling of audio/video signals originating from a mix of analog and digital sources of audio/video signals. In particular, the present invention relates to optimization of hardware resources and of wiring needed for the interconnection of various analog and digital sources of audio/video signals.

### 2. Technical background.

Manufacturers of consumer devices for reception and decoding of radio-frequency modulated audio/video signals for rendering of audiovisual services (e.g. satellite receivers, cable receivers, terrestrial receivers, digital televisions or mobile cell phones with integrated satellite, cable or terrestrial receivers), tend to minimize hardware resources of those devices in order to reduce production costs and ensure a competitive market price. In particular, processing and memory resources are tailored to the strictly needed.

While the current trend is to a full-digital consumer electronic equipment, there are still many devices in consumer households that do not comply to the latest digital interconnection standards and interfaces, such as HDMI (High-Definition Multimedia Interface). Consumers are reluctant to change perfectly functioning devices with analog audio/video inputs and outputs for new devices just because their recently bought flat-screen digital television equipment does not allow to connect their existing equipment. Therefore, manufacturers still need to supply their latest digital consumer electronic devices with additional analog audio/video inputs for backwards compatibility.

For consumers, the interconnection of the mix of analog and digital equipment, having different connection interfaces, is not easy to master and results in undesired quantity of unaesthetic and dust-retaining wiring.

There is thus a need for optimization of the interconnection of analog and digital equipment and of the hardware resources needed in digital audio/video devices to connect to existing analog audio/video devices that avoids additional and complex wiring.

### 3. Summary of the invention.

The present invention aims at alleviating some of the inconveniences of prior art.

The invention proposes a solution for optimization of the interconnection of analog and digital audio/video devices, that avoids among others the aforementioned drawbacks of prior art solutions.

The term 'audio/video' and the abbreviation 'AV' is used in this document to indicate audio, video, or both audio and video.

In order to optimize the interconnection of analog and digital audio/video devices, the invention proposes a device for reception and decoding of radio frequency modulated audio/video signals, that comprises:
- a digital audio/video output interface,
- an analog to digital convertor, the analog to digital convertor being used for conversion of audio/video signals that are output on the digital audio/video interface after further processing by said device, and
- the analog to digital convertor converting either a signal received from a source of reception of said radio frequency modulated audio/video signals, referred to as a first source of audio/video signals, or converting a signal received from an analog audio/video interface for transmission of analog audio/video signals, referred to as a second source of audio/video signals, the conversion of either one of the first or second source of audio/video signals determining which of the first or second signal sources is being used as a signal source for output of a digital audio/video signal on the digital audio/video output interface.

According to a variant embodiment of the invention, the device further comprises a switch for selection of either one of the first or second source of audio/video signals.

According to a variant embodiment of the invention, the device further comprises a controller for controlling the switch.

According to a variant embodiment of the invention, the controller switches off hardware components that are not needed for reception of audio/video signals according to said selection of either one of said first or second source of audio/video signals.

According to a variant embodiment of the invention, the device is a Set Top Box for reception of digital radio and television programs.

According to a variant embodiment of the invention, the digital audio/video output interface (2102) is according to a High-Definition Multi-media Interface.

According to a variant embodiment of the invention, the analog audio/video input interface is one of according to a
- Radio and Television Receiver Manufacturers' Association interface, also referred to as SCART, Péritel, EuroSCART, Euroconnector, EuroAV and EIA Multiport interface;
- S-Video interface; or
- CINCH interface.

The invention also concerns a method for handling of audio/video signals, implemented by a device for reception and decoding of radio frequency modulated audio/video signals, the method comprising:
- a step of selection of a source of audio/video signals for input into an analog to digital convertor for converting either an input signal received from a source of reception of the radio frequency modulated audio/video signals, referred to as a first source of audio/video signals, or for converting an input signal received from an analog audio/video interface for transmission of analog audio/video signals, referred to as a second source of audio/video signals, the conversion of either one of the first or second source of audio/video signals determining which of the first or second signal sources is being used as a signal source for output of a digital audio/video signal on the digital audio/video output; and
- a step of analog to digital conversion by the analog to digital convertor of audio/video signals that are output on the digital audio/video output after the analog to digital conversion and further processing by the device.

According to a variant embodiment of the method, the method comprises a step of selection of either one of the first or second source of audio/video signals.

According to a variant embodiment of the method, the method comprises a step of controlling the selection.

According to a variant embodiment of the method, the method comprises a step of switching off hardware components that are not needed for reception of audio/video signals according to the selection of either one of said first or second source of audio/video signals.

According to a variant embodiment of the method, the device implementing the method is a Set Top Box for reception of digital radio and television programs.

According to a variant embodiment of the method, the digital audio/video output is according to a High-Definition Multi-media Interface.

### 4. List of figures.

The discussed advantages and other, not yet discussed advantages of the invention will appear through the following description of particular, non-restricting embodiments of the invention.

The embodiments are described with reference to the following figures:
Figure 1 shows prior-art interconnection of analog and digital audio/video devices.
Figure 2 shows a device 21 implementing an embodiment of the invention.
Figure 3 shows an embodiment of the invention in a receiver device, implemented for example by a particular variant of the receiver device 21 of figure 2.
Figure 4 shows a variant embodiment of the invention in a receiver device, implemented for example by a particular variant of the receiver device 21 of figure 2.
Figure 5 shows a variant embodiment of the invention in a receiver device, implemented for example by a particular variant of the receiver device 21 of figure 2.
Figure 6 shows an algorithm implementing a particular embodiment of the method of the invention, implemented for example by the receiver device 31 of figure 3, or receiver device 41 of figure 4, or receiver device 51 of figure 5.

### 5. Detailed description of the invention.

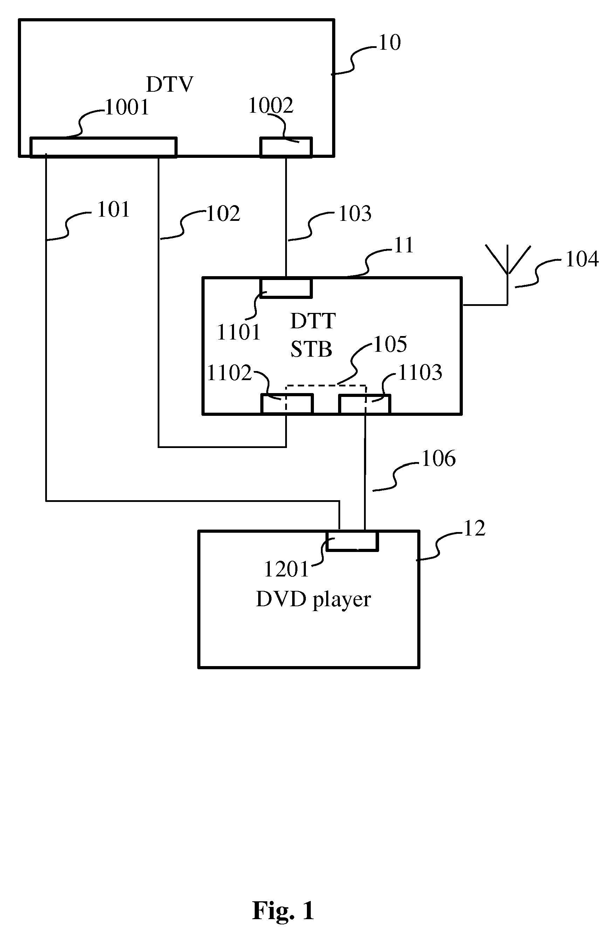

**Figure 1** shows prior-art interconnection of analog and digital audio/video devices. Digital Terrestrial Television (DTT) Set Top Box (STB) 11 and a DVD player 12 are connected to a digital television 10.

DTV 10 is equipped with analog audio/video input interface 1001 and digital video input interface 1002. DTT STB 11 is equipped with a digital audio/video output interface 1101 and an analog audio/video input interface 1103 and output interface 1102. DVD player 12 is equipped with an analog output interface 1201. For reception of a radio frequency (RF) signal, STB 11 is further connected to an antenna 104.
The figure shows several prior-art possibilities of interconnection for DVD player 12 to DTV 10; DVD player 12 can either be connected directly to DTV 10 via analog connection 101, or indirectly, via STB 11 and analog connections 106 and 102. STB 11 is connected to DTV 10 via digital connection 103. In a typical situation, the analog interfaces 1001, 1102, 1103 and 1201 are of the SCART type (from Syndicat des Constructeurs d'Appareils Radiorécepteurs et Téléviseurs, Radio and Television Receiver Manufacturers' Association), also known as Péritel, EuroSCART, Euroconnector, EuroAV and EIA Multiport interface, or of the S-Video interface type, or of the CINCH interface type (also known as RCA jack), whereas digital interfaces 1002 and 1101 are of the HDMI type (High-Definition Multimedia Interface).

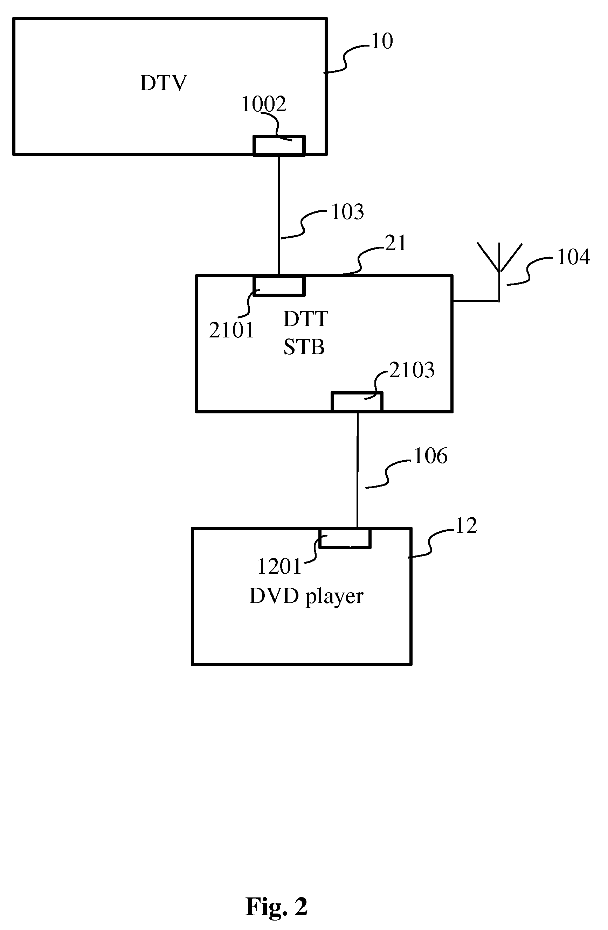

**Figure 2** shows a receiver device 21 that comprises an embodiment of the invention. Compared to prior art fig. 1, the number of interfaces and wires is considerably reduced. DVD player 12, with analog output interface 1201, is connected to DTV 10 via analog audio/video connection 106 that links DVD player 12 to DTT STB 21 and via a digital audio/video connection 103 that links DTT STB 21 to DTV 10. DTT STB 21 comprises an analog input interface 2103 and a digital output interface 2101. DTV 10 now needs only one digital input interface 1002. Wiring is reduced to the minimum, each device is connected via a single connection to another device.

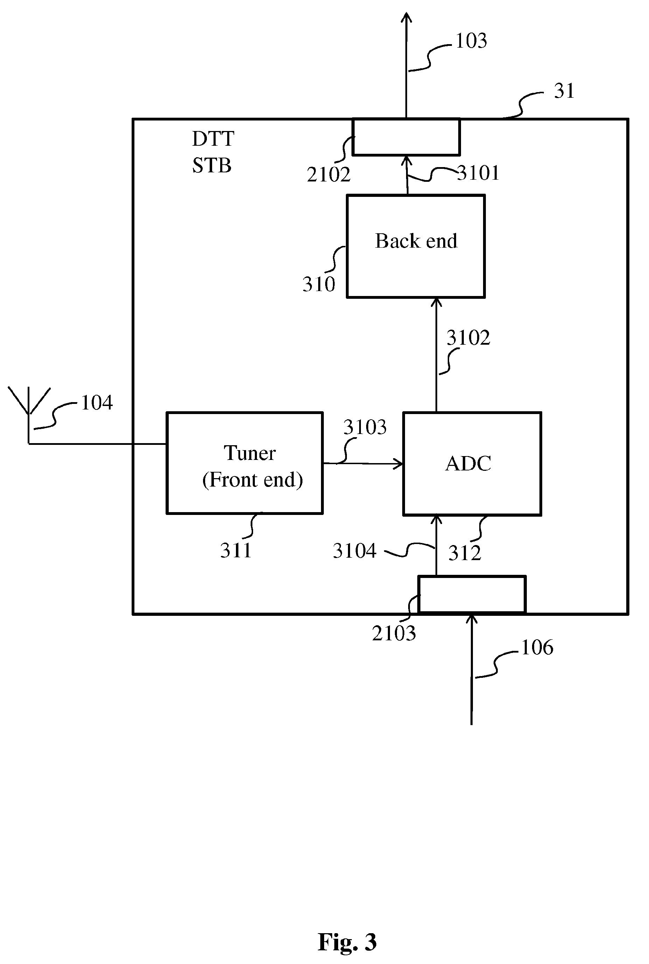

**Figure 3** diagrammatically shows an embodiment of the invention in a receiver device, implemented for example by a particular variant of the receiver device 21 of figure 2. According to the particular implementation, the invention is implemented in a DTT STB 31 of which only components are shown that are of particular relevance for explanation of the invention. Components not shown are for example a central processing unit, memory, data-and communication bus, decoder, internal clock, and input means for control of the device by a user. The DTT STB 31 comprises at least a tuner or front-end 311, an analog to digital convertor (ADC) 312 and a back-end 310. The ADC 312 receives analog audio/video signals either from tuner 311 via connection 3102, where the ADC is used for demodulation of the RF signal or from another audio/video device such as DVD player 12 via link 106 and analog audio/video interface 2103 and connection 3104. The digital audio/video output of the ADC 312 is connected to back-end 310, and the back-end 310 is in turn connected to digital audio/video interface 2102, which outputs the digital audio/video signals on link 103 after further processing. The further processing comprises for example descrambling, decoding/encoding, extraction of information such as tables, and conversion of PAL (Phase Alternate Line) to 4:2:2. According to a variant embodiment of the invention, the ADC 312 is part of back-end 310. The invention allows to reuse an existing ADC that is present in any RF audio/video receiver, such as an ADC used for demodulation of RF signals, for analog to digital conversion of analog audio/video signals originating from another audio/video device, and thus reduces in the same time the number of hardware components and wires needed to interface the devices. DVB-C (Digital Video Broadcasting - Cable) receivers for example integrate 10 bits ADCs used for RF demodulation, which are also sufficient for analog to digital conversion of audio/video signals. Other examples of decoding standards are DVB-C2, DVB-S2 and DVB-T2 (second generation standards for Cable, Satellite and Terrestrial receivers) that require ADCs for demodulation that are sufficiently powerful for analog to digital conversion of audio/video signals. The full-band ADCs which are used in next generation RF receivers, are also largely sufficient for analog to digital conversion of audio/video signals. These full-band ADCs convert a complete RF reception band up to for example 1 GHz, and an RF receiver equipped with such a component does no longer implement a tuner function, i.e. frequency transposition of a chosen channel.

A part from the advantage procured by the invention of a double use of the ADC, the invention also allows an analog source of audio/video signals to take advantage of any signal handling already offered by the RF receiver, such as video scaling (converting video signals from one size or resolution to another: usually "upscaling" or "upconverting" a video signal from a low resolution (e.g. SD or standard definition) to one of higher resolution (e.g. HDTV or high definition television). Another advantage, is that the particular interconnection of the devices made possible through the invention, allows for a more ergonomic operation. Whereas according to prior art wiring such as illustrated by figure 1 a user has to switch to a secondary input (for example AV1) of DTV 10 in order to render the analog audio/video signal of DVD player 12 on DTV 10, with the invention it is sufficient to switch off STB 21 in order to render the audio/video of DVD 12 on DTV 10.

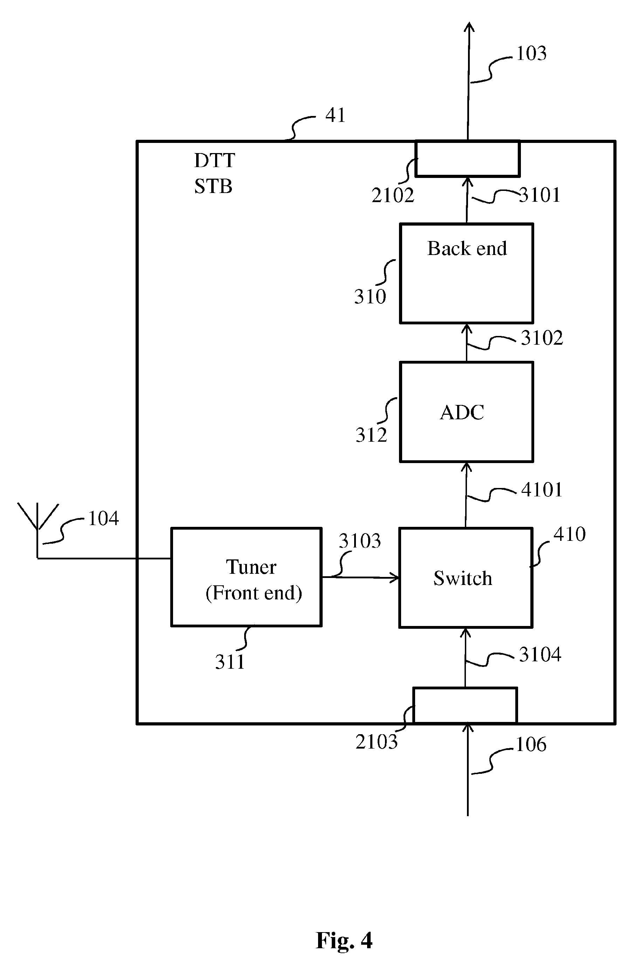

**Figure 4** shows a variant embodiment of the invention in a receiver device, implemented for example by a particular variant of the receiver device 21 of figure 2. The components that are in common with figure 3 have already been discussed for that figure and are therefore not further discussed here. The variant embodiment of the invention is implemented in a receiver 41 that comprises a switch 410 that receives inputs from both the tuner 311 and analog audio/video interface 2103, and which allows to select either of these sources of audio/video signals. The switch is for example operated automatically upon reception of audio/video signal from either source; for example, if an audio/video signal is received from analog audio/video interface 2103, the switch automatically switches to that source, so that the ADC 312 converts audio/video signals from the interface 2103. If no audio/video signal is received from analog audio/video interface 2103, the switch automatically switches to that source, so that the ADC 312 converts signals from tuner 311.

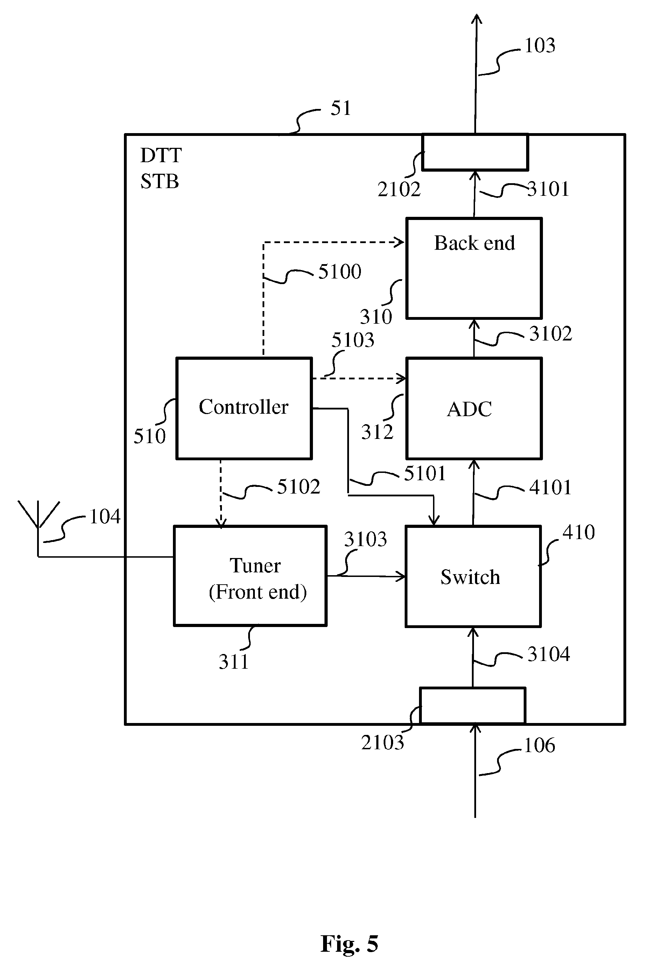

**Figure 5** shows yet another variant embodiment of the invention in a receiver device, implemented for example by a particular variant of the receiver device 21 of figure 2. The components that are in common with figures 3 and 4 have already been discussed for those figures and are therefore not further discussed here. The variant embodiment of the invention is implemented in a receiver 51 that comprises in addition to the components of figure 4 a controller 510 that controls the positioning of switch 410. The controller operates for example controlled via a user-interface, which is in turn controlled by a user. The variant embodiment allows the user to choose between outputting on link 103 and interface 2102 of an audio/video signal originating from either the tuner 311 or the analog audio/video interface 2103, which allows him to decide what to do in case when signals are received on from both the tuner 311 and analog audio/video interface 2103 at the same time.

According to a variant embodiment of the invention illustrated by this figure, the controller also controls other components of the receiver 51, so that when either one of the sources for analog to digital conversion is chosen, resources not needed are switched off or put into a standby or low-power consumption mode, so that power consumption is reduced. For example, when the controller sets the switch 410 in a position to transfer audio/video signals from interface 2103 to ADC 312, it switches off the tuner 311 via connection 5102. In a particular receiver implemented with a full-band ADC that replace a tuner, the full-band ADC can be configured by a controller such as controller 510 to reduce the sampling frequency in order to adapt to the analog audio/video signals of a range of 6-7Mhz originating from the analog audio/video signal source when the full-band ADC is not used to convert RF signals. This feature helps to reduce the power consumption of the device implementing the invention.

According to a variant embodiment of the invention, the controller controls any other components so as to change their parameterization or configuration. For example, when the controller sets switch 410 in a position to transfer audio/video signals from interface 2103 to ADC 312, it instructs the back-end to do SD to HD video upscaling for the analog audio/video signal received from DVD player 12 via connection 5100.

According to a particular embodiment of the invention, the discussed variant embodiments can be combined to form a particularly interesting variant with the combined advantages of each individual variant.

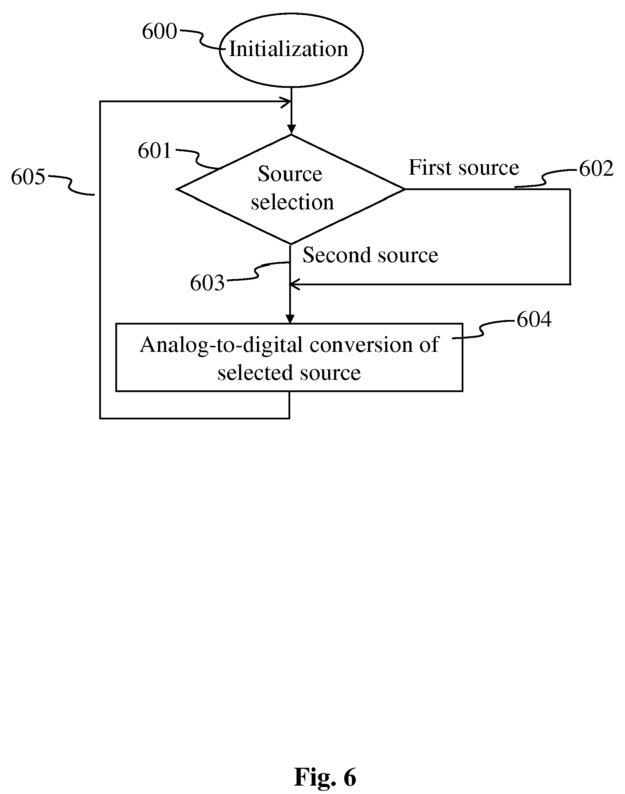

**Figure 6** shows an algorithm for implementing a particular embodiment of the method of the invention, implemented for example by the receiver device 31 of figure 3, or the receiver device 41 of figure 4, or the receiver device 51 of figure 5.

In a first step 600, variables and attributes are initialized that are used by the algorithm. In a next step 601, a step of selection of a source of audio/video signals for input into an analog to digital convertor (such as ADC 312 of figs. 3-5) is done, for converting either an input signal received from a source of reception (such as tuner 311 of figs. 3-5) of the radio frequency modulated audio/video signals, further referred to as a first source of audio/video signals, or for converting an input signal received from an analog audio/video interface (such as interface 2103 of figs. 3-5) for transmission of analog audio/video signals, further referred to as a second source of audio/video signals. The conversion of either one of the first or second source of audio/video signals determines which of the first or second signal input sources is being used as a signal source for output of a digital audio/video signal on a digital audio/video output interface (such as interface 2102 of figs. 3-5). In a step 604, an analog to digital conversion is done by the analog to digital convertor of audio/video signals that are output on the digital audio/video output after the analog to digital conversion and after any further processing by the device.

According to a particular embodiment, the invention is entirely implemented in hardware, for example as a dedicated component (for example as an ASIC, FPGA or VLSI) (respectively « Application Specific Integrated Circuit », « Field-Programmable Gate Array » and « Very Large Scale Integration ») or as distinct electronic components integrated in a device or in a form of a mix of hardware and software.

## Claims

1. Device (31, 41, 51) for reception and decoding of radio frequency modulated audio/video signals, comprising a digital audio/video output interface (2102), **characterized in that** said device comprises:
- an analog to digital convertor (312), said analog to digital convertor being used for conversion of audio/video signals that are output on said digital audio/video interface (2102) after further processing by said device (31, 41, 51);
- said analog to digital convertor (312) converting either a signal received from a source (311) of reception of said radio frequency modulated audio/video signals, referred to as a first source of audio/video signals, or converting a signal received from an analog audio/video interface (2103) for transmission of analog audio/video signals, referred to as a second source of audio/video signals, said conversion of either one of said first or second source of audio/video signals determining which of said first or second signal sources is being used as a signal source for output of a digital audio/video signal on said digital audio/video output interface (2102).

2. Device (31, 41, 51) according to claim 1, **characterized in that** said device (31, 41, 51) further comprises a switch (410) for selection of either one of said first or second source of audio/video signals.

3. Device (31, 41, 51) according to claim 2, **characterized in that** said device (31, 41, 51) further comprises a controller (510) for controlling said switch.

4. Device (31, 41, 51) according to claim 3, **characterized in that** said controller (510) switches off hardware components that are not needed for reception of audio/video signals according to said selection of either one of said first or second source of audio/video signals.

5. Device (31, 41, 51) according to one of claims 1 to 4, **characterized in that** said device (31, 41, 51) is a Set Top Box for reception of digital radio and television programs.

6. Device (31, 41, 51) according to one of claims 1 to 5, **characterized in that** said digital audio/video output interface (2102) is according to a High-Definition Multi-media Interface.

7. Device (31, 41, 51) according to one of claims 1 to 6, **characterized in that** said analog audio/video input interface (2103) is one of according to a
- Radio and Television Receiver Manufacturers' Association interface, also referred to as SCART, Péritel, EuroSCART, Euroconnector, EuroAV and EIA Multiport interface;
- S-Video interface; or
- CINCH interface.

8. Method for handling of audio/video signals, implemented by a device (31, 41, 51) for reception and decoding of radio frequency modulated audio/video signals, said device (31, 41, 51) comprising a digital audio/video output interface (2102), **characterized in that** said method comprises the following steps:
- a step of selection (601) of a source of audio/video signals for input into an analog to digital convertor (312) for converting either an input signal received from a source of reception (311) of said radio frequency modulated audio/video signals, referred to as a first source of audio/video signals, or for converting an input signal received from an analog audio/video interface (2103) for transmission of analog audio/video signals, referred to as a second source of audio/video signals, said conversion of either one of said first or second source of audio/video signals determining which of said first or second signal sources is being used as a signal source for output of a digital audio/video signal on said digital audio/video output (2102); and
- a step of analog to digital conversion (604) by said analog to digital convertor (312) of audio/video signals that are output on said digital audio/video output (2102) after said analog to digital conversion and further processing by said device (31, 41, 51).

9. Method according to claim 8, **characterized in that** said method further comprises a step of selection of either one of said first or second source of audio/video signals.

10. Method according to claim 9, **characterized in that** said method further comprises a step of controlling said selection.

11. Method according to claim 10, **characterized in that** said method further comprises a step of switching off hardware components that are not needed for reception of audio/video signals according to said selection of either one of said first or second source of audio/video signals.

12. Method according to one of claims 8 to 11, **characterized in that** said device (31, 41, 51) is a Set Top Box for reception of digital radio and television programs.

13. Method according to one of claims 8 to 12, **characterized in that** said digital audio/video output (2102) is according to a High-Definition Multi-media Interface.
